# EUROPÄISCHE PATENTSCHRIFT

(11) **EP 3 966 263 B1**
(45) Veröffentlichungstag und Bekanntmachung des Hinweises auf die Patenterteilung: **01.05.2024**
(21) Anmeldenummer: 21713999.7
(22) Anmeldetag: 30.03.2021
(51) Int. Cl.: C08G 18/10, C08G 18/18, C08G 18/32, C08G 18/40, C08G 18/42, C08G 18/48, C08G 18/63, C08G 18/76, C08K 3/04, B32B 27/06, C08G 18/66, B32B 27/30, C08G 101/00

(54) **VERBUNDELEMENTE AUS THERMOPLASTISCHEN KUNSTSTOFFEN UND POLYURETHANEN, VERFAHREN ZU IHRER HERSTELLUNG UND IHRE VERWENDUNG**
COMPOSITE ELEMENTS MADE OF THERMOPLASTICS AND POLYURETHANES AND METHOD FOR THEIR PREPARATION
ÉLÉMENTS COMPOSITES DE MATIÈRES PLASTIQUES THERMOPLASTIQUES ET DE POLYURÉTHANES AINSI QUE LEUR PROCÉDÉ DE FABRICATION

(30) Priorität: 06.04.2020 EP 20168334
(43) Veröffentlichungstag der Anmeldung: 16.03.2022
(73) Patentinhaber: Covestro Deutschland AG, 51373 Leverkusen (DE)
(72) Erfinder: SCHORNSTEIN, Marcel, 41462 Neuss (DE); REITEMEYER, Timo Lars, 53844 Troisdorf (DE)
(74) Vertreter: Levpat
(86) Internationale Anmeldenummer: PCT/EP2021/058339
(87) Internationale Veröffentlichungsnummer: WO 2021/204603

(56) Entgegenhaltungen:
- WO-A1-2015/185448
- WO-A2-2010/072572
- US-A1- 2014 199 540

## Beschreibung

Die Erfindung betrifft Verbundelemente, die einen thermoplastischen Kunststoff und ein daran sich haftend anschließendes Polyurethan enthalten, Verfahren zu ihrer Herstellung und ihre Verwendung.

Polyisocyanat-Polyadditionsprodukte erhältlich durch Umsetzung von Polyisocyanaten mit gegenüber Isocyanaten reaktiven Verbindungen sowie Verbundelemente von diesen Produkten mit weiteren Kunststoffen sind allgemein bekannt. Eine mechanische Belastung dieser Verbundelemente führt häufig zu einer unerwünschten Ablösung der Kunststoffe von den Polyisocyanat-Polyadditionsprodukten. Insbesondere beim Einsatz solcher Verbundelemente im Automobilbau, für die eine solche Belastung nicht ausgeschlossen werden kann, ist eine Ablösung der Polyisocyanat-Polyadditionsprodukte von den weiteren Kunststoffen und damit eine Zerstörung des Verbundelementes nicht akzeptabel.

Des Weiteren geht das Bestreben insbesondere in der Automobilindustrie dahin, möglichst leichte Bauteile zu verwenden, um Ressourcen sowohl bei der Herstellung als auch beim Antrieb von Automobilen zu schonen und so ökologische und ökonomische Vorteile erzielen zu können.

In WO 2010/072572 werden Verbundelemente aus Kunststoff, an den sich haftend ein Polyisocyanat-Polyadditionsprodukt (PUR) anschließt, offenbart, wobei die PUR-Formulierung einen als Haftvermittler fungierenden Polyesterpolyalkohol enthält. Der Polyesterpolyalkohol ist durch Polykondensation einer Säurekomponente und einem oder mehreren Diolen herstellbar, wobei die Säurekomponente zu 83 bis 97 mol-% aus Adipinsäure und 3 bis 17 mol-% aus Phthalsäure, Isophthalsäure und/oder Terephthalsäure besteht. Zu weiteren, zur Herstellung des Polyurethans nicht zwingend benötigten, isocyanatreaktiven Komponenten werden nur allgemeine Aussagen getroffen, ohne auf konkrete Merkmale einzugehen.

In DE 100 22 280 A1 bzw. in DE 100 22 276 A1 wird offenbart, dass zur Herstellung eines Polyurethans Isocyanatprepolymere verwendet werden, erhältlich aus der Reaktion eines Isocyanats und eines Polyesterpolyalkohols mit Funktionalitäten von 2 bis 3 und OH-Zahlen von 40 bis 400 mg KOH/g aufweisen müssen, wobei als Ausgangskomponenten Adipinsäure und/oder Phthalsäureanhydrid sowie Diole und/oder Triole eingesetzt werden. Zu der zur Herstellung des Polyurethans benötigten isocyanatreaktiven Komponente werden nur allgemeine Aussagen getroffen, ohne auf konkrete Merkmale einzugehen.

In DE 199 28 608 A1 werden Verbundelemente aus Kunststoff, an den sich haftend ein Polyisocyanat-Polyadditionsprodukt (PUR) anschließt, offenbart, wobei die PUR-Formulierung einen Polyesterpolyalkohol der Funktionalität 2 - 3 enthält. Letzterer basiert auf einem Polykondensationsprodukt aus Adipinsäure und/oder Phthalsäureanhydrid sowie Polytetrahydrofuran (PTHF), Hexandiol-1,6, Butandiol-1,4, Monoethylenglykol, Diethylenglykol (DEG), Trimethylolpropan (TMP) und/oder Neopentylglykol. Zu weiteren isocyanatreaktiven Komponenten werden nur allgemeine Aussagen getroffen, ohne auf konkrete Merkmale einzugehen.

In WO2013/017510 A1 werden Verbundelemente aus thermoplastischem Kunststoff, an den sich haftend ein Polyisocyanat-Polyadditionsprodukt (PUR) anschließt, offenbart, wobei die PUR-Formulierung ein Polyesterpolyol mit einer Estergruppenkonzentration von 9 bis 10 mol/kg Ester sowie Polyetherpolyole mit Molekulargewichten von weniger als 5000 g/mol enthält.

In WO 2015/185448 A1 werden Verbundelemente aus mindestens einer Deckschicht und Polyurethanschaumstoff sowie ein Verfahren zu ihrer Herstellung offenbart, wobei die verwendeten Polyetherpolyole ein geringes Molekulargewicht aufweisen und das Polyesterpolyol nicht auf Basis von 1,2-Propandiol hergestellt wird.

Aufgabe der Erfindung war es somit, Verbundelemente zur Verfügung zu stellen, die aufgrund ihrer hervorragenden mechanischen Eigenschaften beispielsweise im Automobilbau eingesetzt werden können und bei denen die Haftung zwischen dem Kunststoff und den daran haftenden Polyisocyanat-Polyadditionsprodukten auch bei mechanischer Belastung nicht verlorengeht.

Überraschenderweise wurde gefunden, dass die vorgenannte Aufgabe durch die erfindungsgemäßen Verbundelemente gelöst werden konnte.

Gegenstand der Erfindung ist ein Verbundelement enthaltend
A. einen thermoplastischen Kunststoff, an den sich haftend
B. ein Produkt der Umsetzung einer Reaktionsmischung umfassend
   i. eine Isocyanatkomponente, umfassend ein oder mehrere Polyisocyanate,
   ii. eine gegenüber Isocyanaten reaktive Komponente umfassend
      ii.1) ein erstes Polyetherpolyol mit einem Molekulargewicht von mindestens 6000 g/mol, erhältlich aus der Reaktion von einem Startermolekül oder einem Gemisch von Startermolekülen mit einer OH-Funktionalität von 1,8 - 3,5 mit Ethylenoxid und Propylenoxid, wobei der Anteil an Ethylenoxid bezogen auf die Gesamtmenge an Ethylen- und Propylenoxid im ersten Polyetherpolyol 10 - 28 Gew.-% beträgt,
      ii.2) ein oder mehrere Polyesterpolyole mit einer Funktionalität von größer 2, und einer Hydroxylzahl von 60 - 150 mg KOH/g, basierend auf der Kondensation von Adipinsäure mit 1,2-Propylenglykol und mindestens einer weiteren Verbindung, die mindestens zwei Hydroxygruppen aufweist,
      ii.3) 1,4-Butandiol,
      ii.4) Diethylentoluoldiamin,
      ii.5) gegebenenfalls weitere Polyetherpolyole,
      ii.6) gegebenenfalls Kettenverlängerer und/oder Vernetzer,
      ii.7) gegebenenfalls Katalysatoren,
      ii.8) gegebenenfalls Treibmittel,
      ii.9) gegebenenfalls Hilfs- und/oder Zusatzstoffe
anschließt.

Das erfindungsgemäße Verbundelement umfasst also mindestens einen thermoplastischen Kunststoff und ein an diesem Kunststoff haftendes Reaktionsprodukt, das erhältlich ist aus der Reaktion einer Reaktionsmischung umfassend eine Isocyanatkomponente, die ein oder mehrere Polyisocyanate umfasst, und einer gegenüber Isocyanaten reaktiven Komponente, die mindestens vier Bestandteile umfasst, nämlich neben 1,4-Butandiol und Diethylentoluoldiamin ein erstes Polyetherpolyol mit einem Molekulargewicht von mindestens 6000 g/mol, erhältlich aus der Reaktion von einem Startermolekül oder einem Gemisch von Startermolekülen mit einer OH-Funktionalität von 1,8 - 3,5 mit Ethylenoxid und Propylenoxid, wobei der Anteil an Ethylenoxid bezogen auf die Gesamtmenge an Ethylen- und Propylenoxid 10 - 28 Gew.-% beträgt, ein oder mehrere Polyesterpolyole mit einer Funktionalität von größer 2, und einer Hydroxylzahl von 60 - 150 mg KOH/g, basierend auf der Kondensation von Adipinsäure mit 1,2-Propylenglykol und mindestens einer weiteren Verbindung, die mindestens zwei Hydroxygruppen aufweist. Die Reaktionsmischung kann darüber hinaus z.B. weitere Polyetherpolyole, Kettenverlängerer und/oder Vernetzer, Katalysatoren, Treibmittel oder Hilfs- und/oder Zusatzstoffe enthalten.

Bevorzugt enthält die gegenüber Isocyanaten reaktive Komponente ii. 50 - 90 Gew.-% des ersten Polyetherpolyols ii.1), bezogen auf die Gesamtmenge der gegenüber Isocyanaten reaktiven Komponente ii.

Weiterhin bevorzugt enthält die gegenüber Isocyanaten reaktive Komponente ii. 0,1 - 10 Gew.-% des bzw. der Polyesterpolyols ii.2), gegebenenfalls wobei der Anteil des ersten Polyetherpolyols ii.1) 50 - 90 Gew.-% beträgt, jeweils bezogen auf die Gesamtmenge der gegenüber Isocyanaten reaktiven Komponente ii.

Weiterhin bevorzugt enthält die gegenüber Isocyanaten reaktive Komponente ii. 0,1 - 2,0 Gew.-% Butandiol ii.3), gegebenenfalls wobei der Anteil des ersten Polyetherpolyols ii.1) 50 - 90 Gew.-% und/oder der Anteil des bzw. der Polyesterpolyols ii.2) 0,1- 10 Gew.-% beträgt, jeweils bezogen auf die Gesamtmenge der gegenüber Isocyanaten reaktiven Komponente ii.

Weiterhin bevorzugt enthält die gegenüber Isocyanaten reaktive Komponente ii. 0,01 - 2,0 Gew.-% Diethylentoluoldiamin ii.4), gegebenenfalls wobei der Anteil des ersten Polyetherpolyols ii.1) 50 - 90 Gew.-%, der Anteil des bzw. der Polyesterpolyols ii.2) 0,1 - 10 Gew.-% und/oder der Anteil an Butandiol ii.3) 0,1 - 2 Gew.-% beträgt, jeweils bezogen auf die Gesamtmenge der gegenüber Isocyanaten reaktiven Komponente ii.

Bevorzugt ist also eine gegenüber Isocyanaten reaktive Komponente ii., wobei der Anteil an ii.1) 50 - 90 Gew.-% und/oder der Anteil an ii.2) 0,1 - 10 Gew.-% und/oder der Anteil an ii.3) 0,1 - 2,0 Gew.-% und/oder der Anteil an ii.4) 0,01 - 2,0 Gew.-% beträgt, jeweils bezogen auf die Gesamtmenge an gegenüber Isocyanaten reaktiver Komponente ii.

In einer Ausführungsform besteht die erfindungsgemäße gegenüber Isocyanaten reaktive Komponente aus den Komponenten ii.1), ii.2), ii.3) und ii.4) sowie gegebenenfalls ii.5), ii.6), ii.7), ii.8) und/oder ii.9).

In einer weiteren Ausführungsform weist das Produkt der Umsetzung der Reaktionsmischung eine Dichte von 155 kg/m³ oder weniger bzw. 100 bis 155 kg/m³, bevorzugt von 140 kg/m³ oder weniger bzw. 100 bis 140 kg/m³, noch mehr bevorzugt von 130 kg/m³ oder weniger, insbesondere 100 bis 130 kg/m³ auf.

In einer bevorzugten Ausführungsform weist das erste Polyetherpolyol ii.1) ein Molekulargewicht von 6000 - 10000 g/mol, mehr bevorzugt 6000 - 8000 g/mol, noch mehr bevorzugt 6000 - 7000 g/mol, am meisten bevorzugt 6000 - 6500 g/mol, insbesondere 6100 - 6300 g/mol auf.

In einer weiteren Ausführungsform beträgt für das erste Polyetherpolyol ii.1) der Anteil an Ethylenoxid bezogen auf die Gesamtmenge an Ethylen- und Propylenoxid 15 - 25 Gew.-%, insbesondere 18 - 23 Gew.-%, jeweils im ersten Polyetherpolyol ii.1).

Weiterhin bevorzugt sind Verbundelemente, in denen für das erste Polyetherpolyol ii.1) das Startermolekül - wenn es ein einziges Startermolekül gibt - ausgewählt ist aus der Gruppe bestehend aus Ethylenglykol, 1,2- und 1,3-Propylenglykol, 1,4-Butandiol, 4,4'-Dihydroxy-diphenylpropan, Glycerin, Trimethylolpropan, Erythrit, Sorbit, Ammoniak, Ethylendiamin, Anilin, Ethanolamin und Triethanolamin, bzw. - wenn es ein Gemisch von Startermolekülen gibt - dieses Gemisch aus Komponenten besteht, die ausgewählt sind aus der Gruppe bestehend aus den genannten Verbindungen. Besonders vorteilhaft sind solche Verbundelemente, in denen das Startermolekül für das erste Polyetherpolyol ii.1) Glycerin ist bzw. das Gemisch von Startermolekülen Glycerin umfasst.

Die gegenüber Isocyanaten reaktive Komponente weist ein Polyesterpolyol ii.2) auf, das auf der Kondensation von Adipinsäure mit 1,2-Propylenglykol und mindestens einer weiteren Verbindung, die mindestens zwei Hydroxygruppen aufweist, beruht. In einer bevorzugten Ausführungsform ist die mindestens eine weitere Verbindung, die mindestens zwei Hydroxygruppen aufweist, ausgewählt aus der Gruppe bestehend aus Ethylenglycol, 1,3-Propylenglycol, 1,4-Butandiol, 1,5-Pentandiol, 1,6-Hexandiol und Trimethylolpropan sowie Mischungen daraus, besonders bevorzugt ein Gemisch aus Trimethylolpropan und 1,6-Hexandiol.

Die erfindungsgemäßen Verbundelemente können als thermoplastischen Kunststoff A. einen oder mehrere der üblichen thermoplastischen Kunststoffe enthalten, beispielsweise Acrylnitril-Butadien-Styrol (ABS), Polymethylmethacrylat (PMMA), Acrylnitril-Styrol-Acrylester (ASA), Styrol-Acrylnitril (SAN), Polycarbonat (PC), thermoplastisches Polyurethan (TPU), Polyvinylchlorid (PVC), thermoplastische Polyolefine (TPO) (gegebenenfalls nachvernetzt) wie Polyethylen und Polypropylen, Styrol-Maleinsäureanhydrid-Copolymer (SMA) und Blends, d.h. Mischungen, daraus. Bevorzugt enthalten die Verbundelemente thermoplastisches PVC, besonders bevorzugt PVC-Folie, als thermoplastischen Kunststoff A.

Die thermoplastischen Kunststoffe A. zur Herstellung der Verbundelemente können in üblicher Form eingesetzt werden, beispielsweise als Folien, bevorzugt mit einer Schichtdicke von 0,2 bis 2 mm.

Derartige Folien sind kommerziell erhältlich, und ihre Herstellung ist allgemein bekannt.

Die Verbundelemente können auf der dem thermoplastischen Kunststoff A. abgewandten Seite bei Bedarf zusätzlich einen Träger aus duroplastischen oder thermoplastischen Kunststoffen oder ein selbsttragendes Spritzgussteil, z.B. aus faserverstärkten Thermoplasten oder Duroplasten aufweisen. Bevorzugt kommen in der industriellen Praxis Trägermaterialien aus Polyurethan, Polycarbonat/Acrylnitril-Butadien-Styrol-Copolymere, Polypropylen und Acrylnitril-Butadien-Styrol, die gegebenenfalls faserverstärkt, insbesondere glasfaserverstärkt sein können, zum Einsatz.

Erfindungsgemäß schließen sich an den thermoplastischen Kunststoff A. haftend die Polyisocyanat-Polyadditionsprodukte B. an, beispielsweise Polyurethane, die gegebenenfalls Isocyanurat- und/oder Harnstoffstrukturen aufweisen können. Die Herstellung dieser Polyisocyanat-Polyadditionsprodukte B., bevorzugt der Polyurethane, die in kompakter oder bevorzugt zelliger Form, besonders bevorzugt offenzelliger Form, beispielsweise als Weichschaumstoff, Halbhartschaumstoff oder Hartschaumstoff, besonders bevorzugt als Halbhartschaumstoff vorliegen können, erfolgt durch die Umsetzung der entsprechenden Komponenten der erfindungsgemäßen Reaktionsmischung in Gegenwart des Kunststoffes A.

Bevorzugt sind insbesondere solche Verbundelemente, bei denen die Haftung zwischen dem thermoplastischen Kunststoff A. und dem Produkt der Umsetzung der Reaktionsmischung B. mindestens 26 N/50 mm, bevorzugt mindestens 27 N/50 mm, mehr bevorzugt mindestens 29 N/50 mm beträgt, gemessen in Anlehnung an DIN 53 357 A wie im Beispielteil offenbart.

Ein weiterer Gegenstand der Erfindung ist ein Verfahren zur Herstellung der erfindungsgemäßen Verbundelemente. Dieses Verfahren umfasst die Schritte
I. Bereitstellen des thermoplastischen Kunststoffs A, der Isocyanatkomponente i. und der gegenüber Isocyanaten reaktive Komponente ii.,
II. Vermischen der in Schritt I. bereitgestellten Isocyanatkomponente i. und gegenüber Isocyanaten reaktive Komponente ii., um die Reaktionsmischung zu erhalten,
III. Inkontaktbringen der in Schritt II. erhaltenen Reaktionsmischung mit dem in Schritt I. bereitgestellten thermoplastischen Kunststoff A., so dass die Reaktionsmischung mit dem thermoplastischen Kunststoff A. in Kontakt ist,
IV. Schäumenlassen der in Schritt II. erhaltenen Reaktionsmischung, während sie mit dem thermoplastischen Kunststoff in Kontakt ist, um ein Verbundelement, enthaltend den thermoplastischen Kunststoff A., an den sich haftend das Produkt B. der Umsetzung der Reaktionsmischung anschließt, zu erhalten,
V. Entformen des in Schritt IV. erhaltenen Verbundelements.

Außerdem ist die Verwendung der erfindungsgemäßen Verbundelemente in Bauteilen im Fahrzeug- und Flugzeugbau sowie in der Bauindustrie Gegenstand der Erfindung, beispielsweise in Armaturenbrettern, Türverkleidungen, Hutablagen, Konsolen, Armauflagen, Autositzen, Rückenlehnen, Kopfstützen, Dachhimmeln oder Türspiegeln.

Schließlich sind ebenfalls Bauteile im Fahrzeug- oder Flugzeugbau oder in der Bauindustrie, die die erfindungsgemäßen Verbundelemente enthalten, Gegenstand der Erfindung, beispielsweise Armaturenbretter, Türverkleidungen, Hutablagen, Konsolen, Armauflagen, Autositze, Rückenlehnen, Kopfstützen, Dachhimmel oder Türspiegel.

Bei Polyetherpolyolen handelt es sich allgemein um Polyhydroxypolyether, welche auf an sich bekannte Weise durch Polyaddition von Alkylenoxiden an polyfunktionelle Starterverbindungen in Gegenwart von Katalysatoren hergestellt werden können. Die Polyetherpolyole können z.B. aus einer Starterverbindung oder einem Starterverbindungsgemisch mit durchschnittlich 2 bis 6 aktiven Wasserstoffatomen und einem oder mehreren Alkylenoxiden hergestellt werden. Übliche Starterverbindungen sind Moleküle mit 2 bis 8, insbesondere 3 bis 8 oder 3 bis 6, Hydroxylgruppen pro Molekül wie Triethanolamin, Glycerin, Trimethylolpropan, Pentaerythrit, Sorbit und Saccharose. Die Starterverbindungen können allein oder im Gemisch, unter anderem mit difunktionellen Starterverbindungen wie Diethylenglykol, Dipropylenglykol, Triethylenglykol, Tripropylenglykol, 1,4-Butandiol, 1,6-Hexandiol verwendet werden. Bei der Herstellung von Polyetherpolyolen kann ein oder können mehrere Alkylenoxid(e) verwendet werden, z.B. Ethylenoxid, Propylenoxid und Butylenoxid. Diese können allein oder im Gemisch verwendet werden. Bei Verwendung im Gemisch ist es möglich, die Alkylenoxide statistisch oder blockweise oder beides nacheinander umzusetzen.

Das erfindungsgemäße erste Polyetherpolyol ii.1) weist ein Molekulargewicht von mindestens 6000 g/mol auf und ist erhältlich aus der Reaktion von einem Startermolekül oder einem Gemisch von Startermolekülen mit einer OH-Funktionalität von 1,8 - 3,5 mit Ethylenoxid und Propylenoxid, wobei der Anteil an Ethylenoxid bezogen auf die Gesamtmenge an Ethylen- und Propylenoxid im ersten Polyetherpolyol ii.1) 10 - 28 Gew.-%, bevorzugt 15 - 25 Gew.-%, mehr bevorzugt 18 - 23 Gew.-% beträgt. Hierbei kann bei der Herstellung des ersten Polyetherpolyols ii.1) ein Gemisch von Ethylenoxid und Propylenoxid, oder es können die beiden Alkylenoxide nacheinander eingesetzt werden. Bevorzugt wird zunächst Propylenoxid eingesetzt, bevor Ethylenoxid eingesetzt wird. In einer bevorzugten Ausführungsform handelt es sich bei dem Startermolekül oder - wenn ein Gemisch von Startermolekülen verwendet wird - bei einem der Startermoleküle um eines ausgewählt aus der Gruppe bestehend aus Ethylenglykol, 1,2- und 1,3-Propylenglykol, 1,4-Butandiol, 4,4'-Dihydroxy-diphenylpropan, Glycerin, Trimethylolpropan, Erythrit, Sorbit, Ammoniak, Ethylendiamin, Anilin, Ethanolamin und Triethanolamin, in einer besonders bevorzugten Ausführungsform um Glycerin. Insbesondere bevorzugt ist ein erstes Polyetherpolyol ii. 1), das ein Molekulargewicht von 6000 - 10000 g/mol oder 6000 - 8000 g/mol, mehr bevorzugt von 6000 - 7000 g/mol, noch mehr bevorzugt von 6000 - 6500 g/mol, am meisten bevorzugt von 6100 - 6300 g/mol aufweist.

Die Herstellung von Polyesterpolyolen erfolgt allgemein auf die dem Fachmann bekannte Weise durch Polykondensation von Säure mit Diolen und Triolen. Anstelle von oder zusätzlich zur Säure können selbstverständlich auch Säurederivate, wie beispielsweise Säureanhydride und/oder Säurealkylester eingesetzt werden. Normalerweise erfolgt die Polykondensation in Substanz, d.h. ohne Lösungsmittel. Sie kann aber auch in Gegenwart eines Lösungsmittels erfolgen. Zur Beschleunigung der Polykondensation kann ein Katalysator verwendet werden. Ebenso kann die Reaktion durch Anlegen von Vakuum beschleunigt werden. Man kann sie aber auch bei Normaldruck ausführen, wobei dann vorzugsweise ein inertes Gas, beispielsweise Stickstoff, zum Austragen des entstehenden Reaktionswassers bzw. der Alkylalkohole, besonders gegen Ende der Polykondensation eingesetzt wird.

Das erfindungsgemäße Polyesterpolyol ii.2) basiert auf der Kondensation von Adipinsäure mit 1,2-Propylenglykol und mindestens einer weiteren Verbindung, die mindestens zwei Hydroxygruppen aufweist, und weist eine Funktionalität von größer 2 und eine Hydroxylzahl von 60 - 150 mg KOH/g auf.

Die Hydroxylzahl des Polyesterpolyols ii.2) wird durch entsprechende Wahl des molaren Verhältnisses von Hydroxylgruppen aus 1,2-Propylenglykol und der mindestens einen weiteren Verbindung, die mindestens zwei Hydroxygruppen aufweist, zu den Carboxylgruppen der Adipinsäure bzw. den Carboxylgruppenäquivalenten bei Einsatz von Adipinsäurederivaten eingestellt. Die Funktionalität des Polyesterpolyols ii.2) wird durch den jeweiligen Anteil an Polyolen eingestellt. Beispielsweise errechnet sich beim Einsatz von 1,2-Propylenglykol und 1,1,1-Trimethylolpropan (TMP) bei einem ein-molaren Ansatz (die Ansatzgröße des Polyesterpolyols nach Entfernen der Spaltprodukte Wasser oder gegebenenfalls Alkylalkohol entspricht der zahlenmittleren Molmasse) aus der molaren Menge an eingesetztem TMP die Funktionalität F des Polyesterpolyols ii.2) nach der Formel: F = 2 + Mole TMP.

Die OH-Zahl (OHZ, Hydroxylzahl) ist ein Maß für den Gehalt an Hydroxygruppen in dem jeweiligen Polyol bzw. der Polyolmischung. Die OHZ gibt die Menge Kaliumhydroxid in Milligramm an, welche der bei der Acetylierung von einem Gramm Polyol gebundenen Menge Essigsäure gleichwertig ist.

Die Funktionalität im Sinne dieser Anmeldung ist die theoretische Funktionalität, bezogen auf die Anzahl aktiver Wasserstoffe in den Starter-Molekülen, aus denen die Polyether- oder Polyesterpolyole hergestellt werden. Für jedes individuelle Polyol ist also die theoretische Funktionalität eine ganze Zahl. Mischungen solcher Polyole, beispielsweise aus einer Mischung aus di- oder trifunktionellen Startern erzeugte Polyole, können eine theoretische Funktionalität aufweisen, die zwischen den Funktionalitäten der Starter liegt. Beispielsweise weist eine Mischung aus Polyolen, hergestellt aus einer äquimolaren Mischung aus Ethylenglykol und Glycerin, eine theoretische Funktionalität von 2,5 auf.

Als Polyisocyanate der Isocyanatkomponente i. können allgemein bekannte (cyclo)aliphatische und/oder insbesondere aromatische Polyisocyanate eingesetzt werden. Zur Herstellung der erfindungsgemäßen Verbundelemente eignen sich besonders aromatische Diisocyanate, vorzugsweise Diphenylmethandiisocyanat (MDI) und Toluylendiisocyanat (TDI), ganz besonders bevorzugt MDI. Die Isocyanate können in Form der reinen Verbindung oder in modifizierter Form, beispielsweise in Form von Uretdionen, Isocyanuraten, Allophanaten oder Biureten, vorzugsweise in Form von Urethan- und Isocyanatgruppen enthaltenden Umsetzungsprodukten, sogenannten Isocyanat-Prepolymeren, eingesetzt werden.

Bei dem bekannten Prepolymerverfahren wird in einem ersten Schritt die Isocyanatkomponente i. aus einem Polyisocyanat P und einem Unterschuss, bezogen auf die funktionellen NCO-Gruppen, an einem Polyetherpolyol PEP hergestellt. Anschließend wird das Prepolymer i. als Isocyanatkomponente mit den übrigen Komponenten ii.1), ii.2), ii.3) und ii.4) sowie gegebenenfalls ii.5), ii.6), ii.7), ii.8) und/oder ii.9) zu dem gewünschten Produkt B. umgesetzt wird. Vorzugsweise handelt es sich bei dem Polyisocyanat P um ein Diphenylmethandiisocyanat-Gemisch mit einem NCO-Gehalt von 26 bis 33,6 Gew.-% NCO, enthaltend Isomere des monomeren MDI sowie höhere MDI-Homologe und bei dem Polyetherpolyol PEP um einen Polyether (Polypropylenoxid mit einer OH-Zahl von 29 KOH/g und einer nominalen Funktionalität von 6) mit einem NCO-Gehalt von 26 Gew.-% und einem Gehalt an monomerem MDI von 55 - 63 Gew.-%.

Zur Herstellung der erfindungsgemäßen Verbundelemente können die Polyisocyanate der Isocyanatkomponente i. und die gegenüber Isocyanaten reaktive Komponente ii. in solchen Mengen zur Umsetzung gebracht werden, dass das Äquivalenzverhältnis von NCO-Gruppen aus i. zur Summe der reaktiven Wasserstoffatome aus ii. bevorzugt 0,3:1 bis 1,8:1, besonders bevorzugt 0,8:1 bis 1,5:1 und insbesondere 0,9:1 bis 1,2:1, beträgt.

Die Umsetzung zum Produkt kann beispielsweise durch Handguss, durch Hochdruck- oder Niederdruckmaschinen oder durch RIM-Verfahren (reaction-injection-molding) üblicherweise in offenen oder bevorzugt geschlossenen Formwerkzeugen durchgeführt werden. Geeignete Verarbeitungsmaschinen sind handelsüblich erhältlich (z.B. von den Firmen Isotherm, Hennecke, Krauss Maffei u. a.).

Die Komponenten i. und ii. werden üblicherweise in Abhängigkeit vom Anwendungsfall bei einer Temperatur von 10 bis 100 °C, vorzugsweise von 20 bis 60 °C, gemischt und beispielsweise in das Formwerkzeug eingebracht. Die Vermischung kann im Labormaßstab beispielsweise mittels eines Pendraulik-Rührers durchgeführt werden oder in größerem Maßstab mit üblichen Hochdruckmischköpfen erfolgen.

Die Umsetzung des Reaktionsgemisches kann beispielsweise in üblichen, bevorzugt temperierbaren und verschließbaren Formen durchgeführt werden. Insbesondere bei der Herstellung von möglichst glatten Produkten werden als Formwerkzeuge bevorzugt solche verwendet, deren Oberfläche möglichst glatt oder definiert ornamentiert ist und bevorzugt keine Unebenheiten, Risse, Kratzer oder Verunreinigungen aufweist. Die Oberfläche dieser Formen kann beispielsweise durch Polieren vorbehandelt werden.

Als Formwerkzeuge zur Herstellung der Verbundelemente können übliche und kommerziell erhältliche Werkzeuge eingesetzt werden, deren Oberfläche beispielsweise aus Stahl, Aluminium, Email, Teflon, Epoxyharz oder einem anderen polymeren Werkstoff besteht, wobei die Oberfläche gegebenenfalls verchromt, beispielsweise hartverchromt sein kann. Bevorzugt sollten die Formwerkzeuge temperierbar sein, um die bevorzugten Temperaturen einstellen zu können, verschließbar sein und zur Ausübung eines Druckes auf das Produkt entsprechend ausgelegt sein. Steht das Formwerkzeug unter Druck, wird vor dem Öffnen der Form normalerweise eine Druckabsenkung durchgeführt (z.B. durch Vorentriegelung und/oder durch gezielte Entlüftung).

Die Umsetzung zu den Polyisocyanat-Polyadditionsprodukten erfolgt üblicherweise bei einer Formtemperatur von 20 bis 220 °C, bevorzugt von 20 bis 120°C, besonders bevorzugt von 20 bis 60 °C. Die Umsetzung der Reaktionsmischung im Formwerkzeug erfolgt erfindungsgemäß in direktem Kontakt mit dem thermoplastischen Kunststoff A. Dies kann beispielsweise dadurch erreicht werden, dass man A. vor der Umsetzung, wenn es sich bei A. um eine Folie handelt, bevorzugt frei von Falten in der Form platziert und anschließend die Reaktionsmischung in die Form einfüllt sowie vorzugsweise die Form daraufhin verschließt. Es ist ebenso bekannt, dass zunächst die Folie A. und ggf. andere Bauteile in die Form eingelegt werden, danach die Form verschlossen wird und dann die flüssigen Ausgangskomponenten vermischt und in die geschlossene Form injiziert werden.

Zusätzlich zu dem erfindungsgemäß eingesetzten ersten Polyetherpolyol ii.1) können weitere, allgemein bekannte Polyetherpolyole als Komponente ii.5) zum Einsatz kommen. Sie weisen üblicherweise Molekulargewichte von 300 bis 15000 g/mol auf, insbesondere von 320 bis 13000 g/mol und bevorzugt eine Funktionalität von 2 bis 6 auf. Es kann sich hierbei auch um Copolymere handeln, z.B. um Polyetherpolyole mit Styrol-Acrylnitril-Copolymer (SAN)-Anteil. In einer bevorzugten Form handelt es sich bei der Komponente ii.5) um ein Glycerin gestartetes Polyetherpolyol mit 80 Gew.-% Propylenoxid und 20 Gew.-% Ethylenoxid-Endblock mit einem Feststoffanteil von ca. 42 Gew.-% an Styrol-Acrylnitril-Copolymer und einer Hydroxylzahl von ca. 20 mg KOH/g.

Als Komponente ii.6) können die allgemein bekannten Kettenverlängerer und/oder Vernetzer eingesetzt werden. Hierbei kann es sich beispielsweise um solche ausgewählt aus der Gruppe bestehend aus Diethanolamin, Triethanolamin, Glycerin, 1,2-Ethandiol, Isosorbid und Mischungen daraus handeln.

Als Katalysatoren ii.7) können übliche Verbindungen eingesetzt werden, die beispielsweise die Reaktion der Komponente i. mit weiteren Bestandteilen der Komponente ii, insbesondere ii.1), ii.2), ii.3), ii.4) sowie gegebenenfalls ii.5) und/oder ii.6) beschleunigen. In Frage kommen beispielsweise tertiäre Amine und/oder organische Metallverbindungen, insbesondere Zinnverbindungen. Bevorzugt werden als Katalysatoren solche eingesetzt, die zu einem möglichst geringen Fogging, d. h. zu einer möglichst geringen Abgabe von flüchtigen Verbindungen aus dem Umsetzungsprodukt B. führen, beispielsweise Kaliumacetat und/oder Li-Salze und/oder tertiäre Amine mit mindestens einer funktionellen Hydroxyl-Gruppe.

Als Treibmittel ii.8) können zur Herstellung von geschäumten Produkten B., beispielsweise Polyurethanweich-, -halbhart- oder -hartschaumstoffen, die gegebenenfalls Harnstoff und/oder Isocyanuratstrukturen aufweisen können, allgemein bekannte chemisch oder physikalisch wirkende Verbindungen eingesetzt werden. Als chemisch wirkendes Treibmittel kann bevorzugt Wasser eingesetzt werden, welches durch Reaktion mit den Isocyanatgruppen Kohlendioxid bildet. Beispiele für physikalische Treibmittel, d. h. solche inerten Verbindungen, die unter den Bedingungen der Polyurethanbildung verdampfen, sind beispielsweise (cyclo)aliphatische Kohlenwasserstoffe, vorzugsweise solche mit 4 bis 8, besonders bevorzugt 4 bis 6 und insbesondere 5 Kohlenstoffatomen, teilhalogenierte Kohlenwasserstoffe oder Ether, Ketone oder Acetate. Es kann aber auch Kohlenstoffdioxid (COz) verwendet werden, welches beispielsweise bis zur Grenze seiner chemischphysikalischen Löslichkeit zu wenigstens einer der Komponente i. bzw. einem Bestandteil der Komponente ii. zugesetzt wird. Die Menge der eingesetzten Treibmittel richtet sich nach der angestrebten Dichte der Schaumstoffe. Die unterschiedlichen Treibmittel können einzeln oder in beliebigen Mischungen untereinander zum Einsatz kommen.

Die Umsetzung erfolgt gegebenenfalls in Anwesenheit von Hilfs- und/oder Zusatzstoffen ii.9), wie z. B. Füllstoffen, Fasern, z. B. in Form von Geweben und/oder Matten, Zellreglern, oberflächenaktiven Verbindungen und/oder Stabilisatoren gegen oxidative(n), thermische(n) oder mikrobielle(n) Abbau oder Alterung.

Die erfindungsgemäßen Verbundelemente weisen durch die Verwendung des ersten Polyetherpolyols ii.1) insbesondere eine deutlich verbesserte Haftung zwischen A. und B. auf. Die Haftung zu A. ist besonders gut, wenn weichmacherhaltiges PVC eingesetzt wird. Durch die Verwendung des erfindungsgemäßen ersten Polyetherpolyols ii.1) wird erreicht, dass die Haftung zwischen A. und B. bei Messung in Anlehnung an DIN 53357-A Werte von wenigstens 26 N/50 mm, bevorzugt mindestens 27 N/50 mm, mehr bevorzugt mindestens 29 N/50 mm N/50 mm erzielt werden. Die Normierung der Kraft nach DIN 53357-A auf eine Einheitsbreite der Schaumstreifen von 50 mm erfolgte zwecks besserer Vergleichbarkeit der Messungen. Im Rahmen dieser Anmeldung wurden Proben mit einer Breite von 50 mm hergestellt und untersucht.

Die Erfindung soll anhand der nachfolgenden Beispiele näher erläutert werden.

### Beispiele:

Verwendete Messgeräte und Normen:
Bestimmung der Hydroxylzahl gemäß DIN EN ISO 53240-2: Verfahren mit Katalysator, Version November 2007
Bestimmung des NCO-Gehaltes (Kunststoffe -Polyurethanrohstoffe) - gemäß DIN EN ISO 14896 von 2009
Bestimmung der Schaumdichte gemäß DIN 53420
Bestimmung der Trennkraft

Die Prüfung wird in Anlehnung an den Trennversuch gemäß DIN 53357 durchgeführt. Hierzu werden Prüfkörper von 170 mm Länge und 50 mm Breite hergestellt. Prüfgeschwindigkeit: 50 mm/min (gemäß DIN 53357 A wird die Kraft bestimmt; diese Kraft pro Verbundelementbreite stellt die Haftung (Rollschälwiderstand) dar).

Die in der Tabelle 1 angegebenen Werte sind in Gewichtsteilen angegeben, soweit nicht anders angegeben.

Die verwendeten Materialien und Abkürzungen haben die folgende Bedeutung:
- PET A:: Glycerin gestartetes Polyetherpolyol mit 87 Gew.-% Propylenoxid und 13 Gew.-% Ethylenoxid-Endblock mit einer OH-Zahl von 35 mg KOH/g und einer nominalen Funktionalität von 3
- PET B:: Glycerin gestartetes Polyetherpolyol mit 78 Gew.-% Propylenoxid und 22 Gew.-% Ethylenoxid-Endblock mit einer OH-Zahl von 27,5 mg KOH/g und einer nominalen Funktionalität von 3
- PET C:: Glycerin gestartetes Polyetherpolyol mit 83 Gew.-% Propylenoxid und 19 Gew.-% Ethylenoxid-Endblockmit einer OH-Zahl von 35 mg KOH/g und einer nominalen Funktionalität von 3
- PET D:: Ethylendiamin gestartetes Polyetherpolyol mit 100 Gew.-% Propylenoxid, einer OH-Zahl von 630 KOH/g und einer nominalen Funktionalität von 4
- SAN-Polyol:: Glycerin gestartetes Polyetherpolyol mit 80 Gew.-% Propylenoxid und 20 Gew.-% Ethylenoxid-Endblock und einer nominalen Funktionalität von 3 mit einem Feststoffanteil von ca. 42 Gew.-% an Styrol-AcrylnitrilCopolymer und einer Hydroxylzahl von ca. 20 mg KOH/g, Fa. Covestro Deutschland AG
- Polyester-Polyol:: Polyesterpolyol basierend auf Trimethylolpropan, 1,6-Hexandiol, 1,2 Propandiol und Adipinsäure mit einer OH-Zahl von 109 und einer nominalen Funktionalität von 3,23
- Ruß:: ISOPUR^{®} Schwarzpaste N, Fa. ISL-Chemie
- Kettenverlängerer 1:: 1,4-Butandiol
- Kettenverlängerer 2:: Diethyltoluylendiamin
- Kettenverlängerer 3:: Diethanolamin
- Stabilisator:: TEGOSTAB^{®} B8734 LF2, Fa. Evonik, auf Silikonbasis
- Katalysator 1:: N,N,N'-Trimethyl-N'-hydroxyethyl-bisaminoethylether, Fa. Huntsman
- Katalysator 2:: N-[3-(dimethylamino)propyl)-harnstoff, Fa. Evonik
- Katalysator 3:: Mischung aus ca. 95 Gew.-% 6-Dimethylaminohexanol, ca. 5 Gew.-% N-2-[2-(dimethylamino)ethoxy-ethyl]-N-methyl-1,3-propandiamin), Fa. Evonik
- Isocyanat A:: Diphenylmethandiisocyanat-Gemisch mit einem NCO-Gehalt von 32 Gew.-% NCO, enthaltend 0,05-0,5 Gew.-% 2,2'-MDI, 5,5-7,5 Gew.-% 2,4'-MDI, 50-54 Gew.-% 4,4'-MDI sowie höhere MDI-Homologe, Fa. Covestro Deutschland AG
- Isocyanat B:: Polyisocyanat basierend auf Diphenylmethandiisocyanat und einem Sorbitol gestartetem Polyether (Polypropylenoxid mit einer OH-Zahl von 29 KOH/g und einer nominalen Funktionalität von 6) mit einem NCO-Gehalt von 26 Gew.-% und einem monomeren MDI Gehalt von 55 - 63 Gew.-%, Fa. Covestro Deutschland AG.

Als Folie wurde eine im Slush-Verfahren hergestellte Haut auf Basis von PVC-Pulver des Typs DSY 260/02 der Firma Nakan eingesetzt.

**Tabelle 1**

| **Parameter** | | | |
|---|---|---|---|
| | **Beispiel 1** | **Vergleichsbeispiel 2** | **Vergleichsbeispiel 3** |
| PET A | 0,0 | 75,01 | 30 |
| PET B | 73,6 | 0 | 0 |
| PET C | 0 | 0 | 50,4 |
| PET D | 0 | 0 | 2 |
| SAN-Polyol | 14,9 | 15 | 3,35 |
| Polyesterpolyol | 5 | 5 | 5 |
| Wasser | 2,6 | 2,6 | 2,1 |
| Kettenverlängerer 2 | 1,4 | 0,5 | 0,95 |
| Kettenverlängerer 1 | 0,9 | 0 | 0 |
| Russ | 0,5 | 0,5 | 0,5 |
| Kettenverlängerer 3 | 0,0 | 0,23 | 0 |
| Stabilisator | 0 | 0,1 | 0 |
| Katalysator 3 | 0,8 | 0,8 | 0 |
| Katalysator 2 | 0 | 0 | 0,9 |
| Katalysator 1 | 0,3 | 0,3 | 0,2 |
| Isocyanat A | 0 | 0 | 42,6 |
| Isocyanat B | 68,8 | 66,5 | 0 |
| Trennkraft zwischen Schaum und PVC nach 24 h [N/50 mm] | 30 | 25 | 15 |
| Dichte des Schaumes [kg/m³] | 125 | 130 | 150 |

### Herstellung der Verbundelemente

Die Herstellung der Verbundelemente erfolgte in einer mit einem Deckel verschließbaren, mit einer Teflonfolie ausgekleideten Aluminiumform der Dimension 200 × 200 × 10 mm³ bei einer Formtemperatur von 45 °C. Eine Folie aus PVC (200 × 200 × 1,1 mm³) wurde auf den Boden der Form gelegt. Man vermischte in einem 200 L Fass zunächst die Bestandteile der gegenüber Isocyanaten reaktiven Komponente mit einem Rührer für ca. 1 h, so dass 150 kg einer homogenen Polyolformulierung (gegenüber Isocyanaten reaktive Komponente) vorlagen. Danach wurde die Hochdruckanlage mit beiden Komponenten (gegenüber Isocyanaten reaktive Komponente und Isocyanatkomponente) befüllt und die Temperatur jeweils auf 30 °C eingestellt. Anschließend erfolgte die Vermischung beider Komponenten bei 150 bar Komponentendruck über einen Hochdruckmischkopf. Das daraus resultierende Reaktionsgemisch wurde in die offene Form appliziert, und diese wurde verschlossen, wobei die Menge an Reaktionsgemisch so gewählt wurde, dass eine mittlere Dichte des Schaumes von 120 kg/m³ resultierte. Nach ca. 10 Minuten wurde entformt und das Verbundelement für 24 Stunden bei Raumtemperatur gelagert. Anschließend wurden Streifen von 50 mm Breite herausgeschnitten. Diese Streifen wurden hinsichtlich ihrer Haftungseigenschaften (Haftung zwischen PVC-Folie und Polyurethan) geprüft.

Aus den Versuchen wurde deutlich, dass die erfindungsgemäßen Verbundelemente mit dem erfindungsgemäßen Polyetherpolyol eine deutlich höhere Haftung zwischen thermoplastischem Kunststoff und dem Polyisocyanat-Polyadditionsprodukt aufweisen als die nicht erfindungsgemäßen Verbundelemente.

## Patentansprüche

1. Verbundelement enthaltend
A. einen thermoplastischen Kunststoff, an den sich haftend
B. ein Produkt der Umsetzung einer Reaktionsmischung umfassend
i. eine Isocyanatkomponente, umfassend ein oder mehrere Polyisocyanate,
ii. eine gegenüber Isocyanaten reaktive Komponente umfassend
ii. 1) ein erstes Polyetherpolyol mit einem Molekulargewicht von mindestens 6000 g/mol, erhältlich aus der Reaktion von einem Startermolekül oder einem Gemisch von Startermolekülen mit einer OH-Funktionalität von 1,8 - 3,5 mit Ethylenoxid und Propylenoxid, wobei der Anteil an Ethylenoxid bezogen auf die Gesamtmenge an Ethylen- und Propylenoxid im ersten Polyetherpolyol 10 - 28 Gew.-% beträgt,
ii.2) ein oder mehrere Polyesterpolyole mit einer Funktionalität von größer 2, und einer Hydroxylzahl von 60 - 150 mg KOH/g, basierend auf der Kondensation von Adipinsäure mit 1,2-Propylenglykol und mindestens einer weiteren Verbindung, die mindestens zwei Hydroxygruppen aufweist,
ii.3) 1,4-Butandiol,
ii.4) Diethylentoluoldiamin,
ii.5) gegebenenfalls weitere Polyetherpolyole,
ii.6) gegebenenfalls Kettenverlängerer und/oder Vernetzer,
ii.7) gegebenenfalls Katalysatoren,
ii.8) gegebenenfalls Treibmittel,
ii.9) gegebenenfalls Hilfs- und/oder Zusatzstoffe
anschließt.

2. Verbundelement gemäß Anspruch 1, wobei das Produkt der Umsetzung der Reaktionsmischung eine Dichte von 155 kg/m³ oder weniger, bevorzugt von 140 kg/m³ oder weniger, noch mehr bevorzugt von 130 kg/m³ oder weniger bzw. von 100 bis 130 kg/m³ aufweist, bestimmt nach dem in der Beschreibung angegebenen Verfahren.

3. Verbundelement gemäß einem der Ansprüche 1 oder 2, wobei der Anteil an ii.1) 50 - 90 Gew.-% und/oder der Anteil an ii.2) 0,1 - 10 Gew.-% und/oder der Anteil an ii.3) 0,1 - 2,0 Gew.-% und/oder der Anteil an ii.4) 0,01 - 2,0 Gew.-% beträgt, jeweils bezogen auf die Gesamtmenge an gegenüber Isocyanaten reaktiver Komponente ii.

4. Verbundelement gemäß einem der Ansprüche 1 - 3, wobei das erste Polyetherpolyol ii.1) ein Molekulargewicht von 6000 - 10000 g/mol, bevorzugt 6000 - 8000 g/mol, mehr bevorzugt 6000 - 7000 g/mol, noch mehr bevorzugt 6000 - 6500 g/mol, am meisten bevorzugt 6100 - 6300 g/mol aufweist.

5. Verbundelement gemäß einem der Ansprüche 1 - 4, wobei für das erste Polyetherpolyol ii.1) der Anteil an Ethylenoxid bezogen auf die Gesamtmenge an Ethylen- und Propylenoxid 15 - 25 Gew.-%, bevorzugt 18 - 23 Gew.-% beträgt.

6. Verbundelement gemäß einem der Ansprüche 1-5, wobei für das erste Polyetherpolyol ii.1) das Startermolekül ausgewählt ist aus der Gruppe bestehend aus Ethylenglykol, 1,2- und 1,3-Propylenglykol, 1,4-Butandiol, 4,4'-Dihydroxy-diphenylpropan, Glycerin, Trimethylolpropan, Erythrit, Sorbit, Ammoniak, Ethylendiamin, Anilin, Ethanolamin und Triethanolamin bzw. das Gemisch von Startermolekülen Komponenten enthält, die ausgewählt sind aus der Gruppe bestehend aus den genannten Verbindungen, insbesondere wobei das Startermolekül Glycerin ist oder das Gemisch von Startermolekülen Glycerin enthält.

7. Verbundelement gemäß einem der Ansprüche 1 - 6, wobei für das mindestens eine Polyesterpolyol ii.2) die mindestens eine weitere Verbindung, die mindestens zwei Hydroxygruppen aufweist, ausgewählt ist aus der Gruppe bestehend aus Ethylenglycol, 1,3-Propylenglycol, 1,4-Butandiol, 1,5-Pentandiol, 1,6-Hexandiol und Trimethylolpropan sowie Mischungen daraus.

8. Verbundelement gemäß einem der Ansprüche 1 - 7, wobei für das mindestens eine Polyesterpolyol ii.2) die mindestens eine weitere Verbindung, die mindestens zwei Hydroxygruppen aufweist, aus 1,6-Hexandiol und Trimethylolpropan besteht.

9. Verbundelement gemäß einem der Ansprüche 1 - 8, wobei der thermoplastische Kunststoff einen oder mehrere Kunststoffe aus der Gruppe bestehend aus Acrylnitril-Butadien-Styrol (ABS), Polymethylmethacrylat (PMMA), Acrylnitril-Styrol-Acrylester (ASA), Styrol-Acrylnitril (SAN), Polycarbonat (PC), thermoplastisches Polyurethan (TPU), Polyvinylchlorid (PVC), thermoplastische Polyolefine (TPO) (gegebenenfalls nachvernetzt) wie Polyethylen und Polypropylen, Styrol-Maleinsäureanhydrid-Copolymer (SMA) und Blends daraus, umfasst.

10. Verbundelement gemäß einem der Ansprüche 1 - 9, wobei die Haftung zwischen dem thermoplastischen Kunststoff A. und dem Produkt der Umsetzung der Reaktionsmischung B mindestens 26 N/50 mm, bevorzugt mindestens 27 N/50 mm, mehr bevorzugt mindestens 29 N/50 mm N/50 mm beträgt, gemessen in Anlehnung an DIN 53 357 A wie in der Beschreibung offenbart.

11. Verfahren zur Herstellung der Verbundelemente gemäß einem der Ansprüche 1 - 10 enthaltend die Schritte
I. Bereitstellen des thermoplastischen Kunststoffs A., der Isocyanatkomponente i. und der gegenüber Isocyanaten reaktive Komponente ii.,
II. Vermischen der in Schritt I. bereitgestellten Isocyanatkomponente i. und gegenüber Isocyanaten reaktive Komponente ii., um die Reaktionsmischung zu erhalten,
III. Inkontaktbringen der in Schritt II. erhaltenen Reaktionsmischung mit dem in Schritt I. bereitgestellten thermoplastischen Kunststoff A., so dass die Reaktionsmischung mit dem thermoplastischen Kunststoff A. in Kontakt ist,
IV. Schäumenlassen der in Schritt II. erhaltenen Reaktionsmischung, während sie mit dem thermoplastischen Kunststoff in Kontakt ist, um ein Verbundelement, enthaltend den thermoplastischen Kunststoff A., an den sich haftend das Produkt B. der Umsetzung der Reaktionsmischung anschließt, zu erhalten,
V. Entformen des in Schritt IV. erhaltenen Verbundelements.

12. Verwendung der Verbundelemente gemäß einem der Ansprüche 1 - 10 in Bauteilen im Fahrzeug- oder Flugzeugbau oder in der Bauindustrie.

13. Bauteil im Fahrzeug- und Flugzeugbau und in der Bauindustrie enthaltend ein Verbundelement gemäß einem der Ansprüche 1 - 10.

## Claims

1. Composite element comprising
A. a thermoplastic adjoined in adhering fashion by
B. a product of the reaction of a reaction mixture comprising
i. an isocyanate component, comprising one or more polyisocyanates,
ii. an isocyanate-reactive component comprising
11.1) a first polyether polyol having a molecular weight of at least 6000 g/mol, obtainable from the reaction of a starter molecule or a mixture of starter molecules having an OH functionality of 1.8-3.5 with ethylene oxide and propylene oxide, wherein the proportion of ethylene oxide, based on the total amount of ethylene oxide and propylene oxide, in the first polyether polyol is 10-28% by weight,
ii.2) one or more polyester polyols having a functionality of greater than 2, and a hydroxyl number of 60-150 mg KOH/g, based on the condensation of adipic acid with 1,2-propylene glycol and at least one further compound having at least two hydroxyl groups,
ii.3) 1,4-butanediol,
ii.4) diethylenetoluenediamine,
ii.5) optionally further polyether polyols,
ii.6) optionally chain extenders and/or crosslinking agents,
ii.7) optionally catalysts,
ii.8) optionally blowing agents,
ii.9) optionally auxiliaries and/or additives.

2. Composite element according to Claim 1, wherein the product of the reaction of the reaction mixture has a density of 155 kg/m³ or less, preferably of 140 kg/m³ or less, even more preferably of 130 kg/m³ or less or of from 100 to 130 kg/m³, determined in accordance with the procedure indicated in the description.

3. Composite element according to either of Claims 1 and 2, wherein the proportion of ii.1) is 50-90% by weight and/or the proportion of ii.2) is 0.1-10% by weight and/or the proportion of ii.3) is 0.1-2.0% by weight and/or the proportion of ii.4) is 0.01-2.0% by weight, in each case based on the total amount of isocyanate-reactive component ii.

4. Composite element according to any of Claims 1-3, wherein the first polyether polyol ii.1) has a molecular weight of 6000-10 000 g/mol, preferably 6000-8000 g/mol, more preferably 6000-7000 g/mol, even more preferably 6000-6500 g/mol, most preferably 6100-6300 g/mol.

5. Composite element according to any of Claims 1-4, wherein, for the first polyether polyol ii.1), the proportion of ethylene oxide, based on the total amount of ethylene oxide and propylene oxide, is 15-25% by weight, preferably 18-23% by weight.

6. Composite element according to any of Claims 1-5, wherein, for the first polyether polyol ii.1), the starter molecule is selected from the group consisting of ethylene glycol, 1,2- and 1,3-propylene glycol, 1,4-butanediol, 4,4'-dihydroxydiphenylpropane, glycerol, trimethylolpropane, erythritol, sorbitol, ammonia, ethylene diamine, aniline, ethanolamine and triethanolamine, or the mixture of starter molecules comprises components that are selected from the group consisting of the compounds mentioned, in particular wherein the starter molecule is glycerol or the mixture of starter molecules comprises glycerol.

7. Composite element according to any of Claims 1-6, wherein, for the at least one polyester polyol ii.2), the at least one further compound having at least two hydroxyl groups is selected from the group consisting of ethylene glycol, 1,3-propylene glycol, 1,4-butanediol, 1,5-pentanediol, 1,6-hexanediol and trimethylolpropane, as well as mixtures thereof.

8. Composite element according to any of Claims 1-7, wherein, for the at least one polyester polyol ii.2), the at least one further compound having at least two hydroxyl groups consists of 1,6-hexanediol and trimethylolpropane.

9. Composite element according to any of Claims 1-8, wherein the thermoplastic comprises one or more plastics from the group consisting of acrylonitrile-butadienestyrene (ABS), polymethyl methacrylate (PMMA), acrylonitrile-styrene-acrylate (ASA), styreneacrylonitrile (SAN), polycarbonate (PC), thermoplastic polyurethane (TPU), polyvinyl chloride (PVC), thermoplastic polyolefins (TPO) (optionally post-crosslinked), such as polyethylene and polypropylene, styrene-maleic anhydride copolymer (SMA) and blends thereof.

10. Composite element according to any of Claims 1-9, wherein the adhesion between the thermoplastic A. and the product of the reaction of the reaction mixture B is at least 26 N/50 mm, preferably at least 27 N/50 mm, more preferably at least 29 N/50 mm, measured in accordance with DIN 53 357 A as disclosed in the description.

11. Process for producing the composite elements according to any of Claims 1-10, comprising the steps of
I. providing the thermoplastic A., the isocyanate component i. and the isocyanate-reactive component ii.,
II. mixing the isocyanate component i. and isocyanate-reactive component ii. provided in step I. in order to obtain the reaction mixture,
III. bringing the reaction mixture obtained in step II. into contact with the thermoplastic A. provided in step I. so that the reaction mixture is in contact with the thermoplastic A.,
IV. foaming the reaction mixture obtained in step II. while it is in contact with the thermoplastic, in order to obtain a composite element comprising the thermoplastic A. adjoined in adhering fashion by the product B. of the reaction of the reaction mixture,
V. demolding the composite element obtained in step IV.

12. Use of the composite elements according to any of Claims 1-10 in components in vehicle or aircraft construction or in the construction industry.

13. Component in vehicle and aircraft construction and in the construction industry comprising a composite element according to any of Claims 1-10.

## Revendications

1. Élément composite, contenant
A. un matériau synthétique thermoplastique, auquel se raccorde, de manière adhésive,
B. un produit de la transformation d'un mélange réactionnel comportant
i. un composant isocyanate, comportant un ou plusieurs polyisocyanates,
ii. un composant réactif vis-à-vis des isocyanates, comportant
11.1) un premier polyétherpolyol présentant un poids moléculaire d'au moins 6000 g/mole, pouvant être obtenu à partir de la réaction d'une molécule de départ ou d'un mélange de molécules de départ, présentant une fonctionnalité OH de 1,8-3,5, avec de l'oxyde d'éthylène et de l'oxyde de propylène, la proportion d'oxyde d'éthylène par rapport à la quantité totale d'oxyde d'éthylène et d'oxyde de propylène dans le premier polyétherpolyol représentant 10-28% en poids,
ii.2) un ou plusieurs polyesterpolyols présentant une fonctionnalité supérieure à 2 et un indice d'hydroxyle de 60-150 mg de KOH/g, basé(s) sur la condensation d'acide adipique avec du 1,2-propylèneglycol et d'au moins un autre composé, qui présente au moins deux groupes hydroxy,
ii.3) du 1,4-butanediol,
ii.4) de la diéthylènetoluènediamine,
ii.5) le cas échéant d'autres polyétherpolyols,
ii.6) le cas échéant des agents d'allongement de chaîne et/ou des réticulants,
ii.7) le cas échéant des catalyseurs,
ii.8) le cas échéant des agents gonflants,
ii.9) le cas échéant des adjuvants et/ou des additifs.

2. Élément composite selon la revendication 1, le produit de la transformation du mélange réactionnel présentant une densité de 155 kg/m³ ou moins, de préférence de 140 kg/m³ ou moins, encore plus préférablement de 130 kg/m³ ou moins ou, selon le cas, de 100 à 130 kg/m3, déterminée selon le procédé indiqué dans la description.

3. Élément composite selon l'une des revendications 1 ou 2, la proportion de ii.1) représentant 50-90% en poids et/ou la proportion de ii.2) représentant 0,1-10% en poids et/ou la proportion de ii.3) représentant 0,1-2,0% en poids et/ou la proportion de ii.4) représentant 0,01-2,0% en poids, à chaque fois par rapport à la quantité totale de composant ii. réactif vis-à-vis des isocyanates.

4. Élément composite selon l'une des revendications 1-3, le premier polyétherpolyol ii.1) présentant un poids moléculaire de 6000-10.000 g/mole, de préférence de 6000-8000 g/mole, plus préférablement de 6000-7000 g/mole, encore plus préférablement de 6000-6500 g/mole, le plus préférablement de 6100-6300 g/mole.

5. Élément composite selon l'une des revendications 1-4, la proportion d'oxyde d'éthylène pour le premier polyétherpolyol ii.1), par rapport à la quantité totale d'oxyde d'éthylène et d'oxyde de propylène, représentant 15-25% en poids, de préférence 18-23% en poids.

6. Élément composite selon l'une des revendications 1-5, la molécule de départ pour le premier polyétherpolyol ii.1) étant choisie dans le groupe constitué par l'éthylèneglycol, le 1,2-propylèneglycol et le 1,3-propylèneglycol, le 1,4-butanediol, le 4,4'-dihydroxydiphénylpropane, le glycérol, le triméthylolpropane, l'érythritol, le sorbitol, l'ammoniaque, l'éthylènediamine, l'aniline, l'éthanolamine et la triéthanolamine ou, selon le cas, le mélange de molécules de départ contenant des composants qui sont choisis dans le groupe constitué par les composés mentionnés, en particulier la molécule de départ étant le glycérol ou le mélange de molécules de départ contenant du glycérol.

7. Élément composite selon l'une des revendications 1-6, ledit au moins un autre composé, qui présente au moins deux groupes hydroxy, pour ledit au moins un polyesterpolyol ii.2) étant choisi dans le groupe constitué par l'éthylèneglycol, le 1,3-propylèneglycol, le 1,4-butanediol, le 1,5-pentanediol, le 1,6-hexanediol et le triméthylolpropane ainsi que leurs mélanges.

8. Élément composite selon l'une des revendications 1-7, ledit au moins un autre composé, qui présente au moins deux groupes hydroxy, pour ledit au moins un polyesterpolyol ii.2) étant constitué de 1,6-hexanediol et de triméthylolpropane.

9. Élément composite selon l'une des revendications 1-8, le matériau synthétique thermoplastique comportant un ou plusieurs matériaux synthétiques du groupe constitué par l'acrylonitrile-butadiène-styrène (ABS), le poly(méthacrylate de méthyle) (PMMA), l'acrylonitrile-styrène-ester acrylique (ASA), le styrène-acrylonitrile (SAN), le polycarbonate (PC), le polyuréthane thermoplastique (TPU), le poly(chlorure de vinyle) (PVC), les polyoléfines thermoplastiques (TPO) (le cas échéant postréticulées) telles que le polyéthylène et le polypropylène, le copolymère de styrène-anhydride de l'acide maléique (SMA) et leurs mélanges.

10. Élément composite selon l'une des revendications 1-9, l'adhérence entre le matériau synthétique thermoplastique A. et le produit de la transformation du mélange réactionnel B. étant d'au moins 26 N/50 mm, de préférence d'au moins 27 N/50 mm, plus préférablement d'au moins 29 N/50 mm, mesurée par analogie avec la norme DIN 53 357 A, comme divulgué dans la description.

11. Procédé pour la préparation des éléments composites selon l'une des revendications 1-10, contenant les étapes
I. mise à disposition du matériau synthétique thermoplastique A., du composant isocyanate i. et du composant réactif vis-à-vis des isocyanates ii.,
II. mélange du composant isocyanate i. et du composant ii. réactif vis-à-vis des isocyanates mis à disposition dans l'étape I. en vue d'obtenir le mélange réactionnel,
III. mise en contact du mélange réactionnel obtenu dans l'étape II. avec le matériau synthétique thermoplastique A. mis à disposition dans l'étape I., de telle sorte que le mélange réactionnel est en contact avec le matériau synthétique thermoplastique A.,
IV. moussage du mélange réactionnel obtenu dans l'étape II. pendant qu'il est en contact avec le matériau synthétique thermoplastique pour obtenir un élément composite contenant le matériau synthétique thermoplastique A., auquel se raccorde de manière adhésive le produit B. de la transformation du mélange réactionnel,
V. démoulage de l'élément composite obtenu dans l'étape IV.

12. Utilisation des éléments composites selon l'une des revendications 1-10 dans des pièces dans la construction de véhicules ou d'aéronefs ou dans l'industrie de la construction.

13. Pièce dans la construction de véhicules et d'aéronefs et dans l'industrie de la construction, contenant un élément composite selon l'une des revendications 1-10.
